# EUROPÄISCHE PATENTANMELDUNG

(11) **EP 4 663 721 A1**
(43) Veröffentlichungstag der Anmeldung: **17.12.2025**
(21) Anmeldenummer: 25174317.5
(22) Anmeldetag: 05.05.2025
(51) Int. Cl.: C10L 5/44

(54) **VERFAHREN ZUR HERSTELLUNG VON HOLZBRIKETTS AUS GRÜNABFÄLLEN**

(30) Priorität: 12.06.2024 DE 102024116534
(71) Anmelder: Michael Richter GmbH, 33106 Paderborn (DE)
(72) Erfinder: Richter, Michael August Paul, Paderborn (DE); Richter, Felix, Delbrück (DE); Richter, Jan Henrik, Paderborn (DE)
(74) Vertreter: Wickord, Wiro

(57) **Zusammenfassung**

Die Erfindung betrifft ein Verfahren zur Herstellung von Holzbriketts aus Grünabfällen, welches batchweise arbeitet und die folgenden Verfahrensschritte vorsieht, die in der angegebenen Reihenfolge durchlaufen werden:
(1) aus unterschiedlichen Bezugsquellen zur Verfügung gestellte Grünabfälle werden an einem Lagerplatz so lange gesammelt, bis eine für eine Batchverarbeitung ausreichende Rohstoffcharge an Grünabfällen bereitsteht;
(2) die Grünabfälle werden dem Lager entnommen und mechanisch zerkleinert;
(3) die zerkleinerten Grünabfälle werden getrennt, wobei Erdanteile entfernt werden;
(4) die Grünabfälle mit reduziertem Erdanteil werden getrocknet;
(5) die getrockneten Grünabfälle werden mechanisch weiter zerkleinert;
(6) die weiter zerkleinerten Grünabfälle werden getrennt, wobei im Wege der Trennung eine weiterzuverarbeitende Holzkomponente aus den weiter zerkleinerten Grünabfällen gewonnen wird;
(7) die weiterzuverarbeitende Holzkomponente wird getrocknet und grob zerkleinert;
(8) die grob zerkleinerte Holzkomponente wird mechanisch fein zerkleinert;
(9) die fein zerkleinerte Holzkomponente wird gesiebt, wobei im Wege des Siebens eine Feinstholzkomponente aus der Holzkomponente gewonnen wird;
(10) die Feinstholzkomponente wird brikettiert.

## Beschreibung

Die Erfindung betrifft ein Verfahren zur Herstellung von Holzbriketts aus Grünabfällen.

Aus der DE 10 2010 027 542 B4 ist ein Verfahren zur Herstellung von Brennstoffbriketts bekannt. Das dort vorgeschlagene Brikettierverfahren nutzt eine in Bezug auf ihre Zusammensetzung eng tolerierte Rohstoffmischung, die in forstwirtschaftlichen Betrieben bei der Durchforstung und Stammholzernte anfällt. Eine Aufbereitung von Grünabfällen, die abhängig von der Bezugsquelle eine andere, mithin unbekannte und/oder sich im (jahres-) zeitlichen Verlauf verändernde Zusammensetzung aufweist, ist mittels des Brikettierverfahrens nicht vorgesehen.

Aufgabe der vorliegenden Erfindung ist es, Grünabfälle mit einer variablen Zusammensetzung so aufzubereiten, dass sie brikettiert und als Holzbriketts einer thermischen Verwertung zugeführt werden können.

Zur Lösung der Aufgabe weist die Erfindung die Merkmale des Patentanspruchs 1 auf. Demzufolge sieht das Verfahren zur Herstellung von Holzbriketts aus Grünabfällen, welches batchweise arbeitet, die folgenden Verfahrensschritte vor, die in der angegebenen Reihenfolge durchlaufen werden:
(1) aus unterschiedlichen Bezugsquellen zur Verfügung gestellte Grünabfälle werden an einem Lagerplatz wenigstens so lange gesammelt, bis eine für eine Batchverarbeitung ausreichende Rohstoffcharge an Grünabfällen bereitsteht;
(2) die Grünabfälle der Rohstoffcharge werden dem Lager entnommen und dann mechanisch zerkleinert;
(3) die zerkleinerten Grünabfälle werden getrennt, wobei Erdanteile entfernt und Grünabfälle mit reduziertem Erdanteil gewonnen werden;
(4) die Grünabfälle mit reduziertem Erdanteil werden getrocknet;
(5) die getrockneten Grünabfälle werden mechanisch weiter zerkleinert;
(6) die weiter zerkleinerten Grünabfälle werden getrennt, wobei im Wege der Trennung eine weiterzuverarbeitende Holzkomponente aus den weiter zerkleinerten Grünabfällen gewonnen wird;
(7) die weiterzuverarbeitende Holzkomponente wird getrocknet und grob zerkleinert;
(8) die getrocknete und grob zerkleinerte Holzkomponente wird mechanisch fein zerkleinert;
(9) die fein zerkleinerte Holzkomponente wird gesiebt, wobei im Wege des Siebens eine Feinstholzkomponente aus der Holzkomponente gewonnen wird;
(10) die Feinstholzkomponente wird brikettiert.

Der besondere Vorteil der Erfindung besteht darin, dass aus verschiedenen Quellen bezogene Grünabfälle unterschiedlicher Zusammensetzung in einem einheitlichen Herstellverfahren verarbeitet und brikettiert werden. Das erfindungsgemäße Verfahren ist dabei nicht auf Waldrestholz, welches in forstwirtschaftlichen Betrieben bei der Durchforstung beziehungsweise der Stammholzernte anfällt, angewiesen beziehungsweise beschränkt. Es können beispielsweise auch Grünabfälle aus dem Garten- und Landschaftsbau oder landwirtschaftliche Grünabfälle aufbereitet werden. Das erfindungsgemäße Verfahren eignet sich insofern beispielsweise zur Anwendung in Recyclingbetrieben beziehungsweise Wertstoffhöfen, die Grünabfälle aus unterschiedlichen Quellen sammeln und die gesammelten Grünabfälle gemeinsam weiterverarbeiten. Bei diesen Betrieben ist eine einheitliche, gleichbleibende Qualität beziehungsweise Zusammensetzung der Grünabfälle regelmäßig nicht zu gewährleisten.

Zusätzlich trägt das erfindungsgemäße Verfahren der Tatsache Rechnung, dass die in Recyclingbetrieben beziehungsweise Wertstoffhöfen verarbeiteten Grünabfälle typischerweise unbestimmte Mengen an Fremdstoffen enthalten. So ist bei Grünabfällen aus dem Garten- und Landschaftsbau häufig eine Verunreinigung mit mineralischen Komponenten, beispielsweise Steinen oder Beton, zu rechnen. Das erfindungsgemäße Verfahren ist durch eine hohe Toleranz in Bezug auf diese nicht biologisch umsetzbaren Fremdstoffe gekennzeichnet, da die weiterzuverarbeitende Holzkomponente aus den getrockneten Grünabfällen der Rohstoffcharge beziehungsweise der Teilmenge derselben herausgetrennt wird. Insbesondere die mechanische Zerkleinerung der Grünabfälle der Rohstoffcharge im Verfahrensschritt 2 bereitet diese Trennung vor, indem im Rahmen der Zerkleinerung unterschiedliche Materialkomponenten voneinander gelöst und große Steine beziehungsweise Betonblöcke gebrochen werden.

Um die Toleranz in Bezug auf die Zusammensetzung der Grünabfälle zu bewirken, werden die Grünabfälle der Rohstoffcharge in mehreren Verarbeitungsschritten getrennt. Neben dem der Gewinnung der weiterzuverarbeitenden Holzkomponente dienenden Verfahrensschritt 6 ist vorgelagert ein der ersten Trocknung im Verfahrensschritt 4 vorausgehender Trennverfahrensschritt 3 vorgesehen. Dieser vorgelagerte Trennverfahrensschritt sieht beispielsweise ein Sieben vor. Er dient insbesondere dazu, mineralische Komponenten und hier insbesondere Erde und/oder Steine und/oder Beton und/oder weitere nicht-biologische Verunreinigungen wie Metalldrähte von den biologischen Komponenten der Grünabfälle zu trennen.

Beispielsweise wird für die mechanische Zerkleinerung in den Verfahrensschritten 2 und 5 eine Zerkleinerungsvorrichtung mit einer langsam laufenden Shredderwelle benutzt, die im Wesentlichen nur große Bestandteile der Rohstoffcharge der Grünabfälle zerkleinert, wohingegen die Kleinanteile intakt bleiben.

Nach einer Weiterbildung der Erfindung erfolgt die Trocknung der Grünabfälle mit reduziertem Erdanteil im Wege einer Mietentrocknung über einen Zeitraum von 4 bis 8 und typischerweise 6 Wochen. Die Mietentrocknung ist eine langjährig erprobte und kostengünstige Möglichkeit, den Grünabfällen Feuchtigkeit zu entziehen. Die im Rahmen der Trocknung beziehungsweise teilweisen Umsetzung der Blattgrünkomponenten entstehende Wärme unterstützt den Trocknungsprozess. Auf die Zuführung von Fremdwärme für die Trocknung kann insofern typischerweise verzichtet werden.

Nach einer Weiterbildung der Erfindung werden die getrockneten und weiter zerkleinerten Grünabfälle in einem mehrstufigen Verfahrensschritt getrennt. Der mehrstufige Trennverfahrensschritt sieht ein Sieben und/oder ein Abscheiden als Unterverfahrensschritte vor.

Die Holzkomponente wird in dem mehrstufigen Trennverfahrensschritt im Wege des Abscheidens gewonnen. Das Abscheiden erfolgt bevorzugt in einem Wasserbad, in dem die Holzkomponente von anderen Feststoffen mit einer größeren Dichte getrennt wird. Praktisch sieht dies beispielsweise so aus, dass die Holzkomponente im Wasserbad schwimmt und beispielsweise über ein Bürstenband abgefischt beziehungsweise ausgetragen werden kann, wohingegen Steine, metallische Bestandteile oder andere Komponenten mit einer höheren Dichte als Wasser zu Boden sinken, um beispielsweise über ein Förderband vom Grund des Beckens abtransportiert zu werden.

Soweit der Trennverfahrensschritt als Unterverfahrensschritt das Sieben vorsieht, erfolgt das Sieben bevorzugt vor dem Abscheiden. Hierbei kann das Sieben ebenfalls mehrstufig erfolgen und dazu dienen, eine Humuskomponente und/oder eine Mischkomponente mit Kleinholz und Steinen zu gewinnen. Die Humuskomponente sowie die Mischkomponente können getrennt von der Holzkomponente weiter verwertet werden. Allein die Holzkomponente wird im weiteren Verfahren verwendet für die Herstellung der Holzbriketts.

Nach einer Weiterbildung der Erfindung wird die im Wege der Trennung gewonnene, weiterzuverarbeitende Holzkomponente getrocknet und grob zerkleinert. Das Trocknen und grobe Zerkleinern erfolgt sequentiell, wobei die Reihenfolge abhängig von dem Feuchtegrad der Holzkomponente und/oder den Betriebseigenschaften der jeweiligen Zerkleinerungsvorrichtung bedarfsgerecht festgelegt wird.

Die Trocknung erfolgt erneut bevorzugt im Wege einer Mietentrocknung über einen Zeitraum von vier bis acht Wochen. Eine Restfeuchte der getrockneten Holzkomponente liegt bei weniger als 15 % und bevorzugt bei weniger als 10 %.

Bei der erneuten Mietentrocknung hat es sich als vorteilhaft erweisen, der weiterzuverarbeitenden Holzkomponente, welche optional bereits grob zerkleinert sein kann, Wärmeenergie zuführen. Beispielsweise kann hierzu erwärmte Luft in die Miete eingebracht oder die Miete auf einer erwärmbaren Bodenplatte angeordnet werden.

Nach einer Weiterbildung der Erfindung wird die getrocknete und grob zerkleinerte Holzkomponente mechanisch auf eine Größe von maximal 20 mm zerkleinert. Die auf dieses Maß zerkleinerte getrocknete Holzkomponente wird dann gesiebt. Im Wege der Siebung wird eine Feinstholzkomponente mit einer Größe von maximal 10 mm sowie bevorzugt auch eine Holzhackschnitzelkomponente mit einer Größe im Bereich von 10 bis 20 mm gewonnen. Allein aus der Feinstholzkomponente werden im Weiteren die Holzbriketts gewonnen.

Die Holzhackschnitzelkomponente kann einer getrennten wirtschaftlichen Verwertung zugeführt werden oder sie wird einer erneuten Zerkleinerung zugeführt und steht dann ebenfalls als Feinstholzkomponente mit einer Größe von maximal 10 mm zur Verfügung.

Nach einer Weiterbildung der Erfindung erfolgt die Brikettierung der reinen Feinstholzkomponente, das heißt der Feinstholzkomponente ohne Zusatzstoffe beziehungsweise ohne hinzugefügte Bindemittel. Als natürliches Bindemittel für die Holzbriketts dient allein das in der Feinstholzkomponente enthaltene Lignin. Es kann auf diese Weise vorteilhaft ein natürlicher Brennstoff ohne Zusatzstoffe bereitgestellt werden, der einen um etwa 20 % höheren Brennwert aufweist als Scheitholz.

Aus den weiteren Unteransprüchen und der nachfolgenden Beschreibung sind weitere Vorteile, Merkmale und Einzelheiten des erfindungsgemäßen Verfahrens zu entnehmen. Dort erwähnte Merkmale können jeweils einzeln für sich oder auch in beliebiger Kombination erfindungswesentlich sein. So kann auf die Offenbarung zu den einzelnen Erfindungsaspekten stets wechselseitig Bezug genommen werden.

Die Zeichnungen dienen lediglich beispielhaft der Klarstellung der Erfindung und haben keinen einschränkenden Charakter. Es zeigen:
- Fig. 1: ein Ablaufdiagramm eines erfindungsgemäßen Verfahrens zur Herstellung von Holzbriketts aus Grünabfällen,
- Fig. 2: eine erste Detaillierung eines Verfahrensschritts "Trennen" des Herstellverfahrens nach Fig. 1 in zwei Unterverfahrensschritte und
- Fig. 3: eine weitere Detaillierung eines Unterverfahrensschritts "Sieben" des Verfahrensschritts "Trennen" nach Fig. 2.

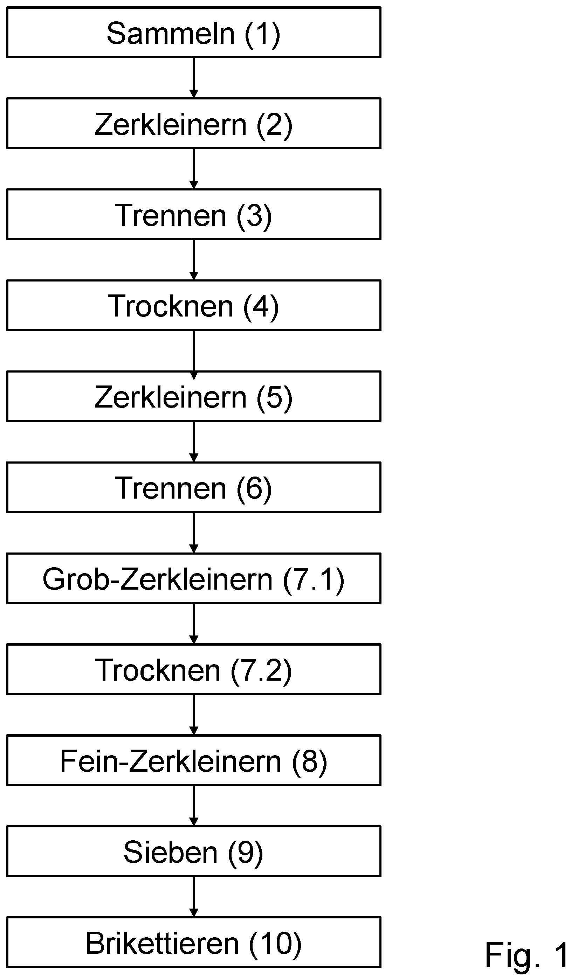

Ein grundsätzlicher Verfahrensablauf des erfindungsgemäßen Herstellverfahrens für die Holzbriketts ist in Fig. 1 dargestellt. Das Herstellverfahren unterteilt sich demzufolge in zehn Verfahrensschritte, die in der angegebenen Reihenfolge von Verfahrensschritt (1) bis Verfahrensschritt (10) durchlaufen werden.

Zunächst werden die Grünabfälle, die aus unterschiedlichen Quellen, beispielsweise der Landwirtschaft, der Forstwirtschaft und/oder dem Garten- und Landschaftsbau stammen können, gesammelt (Verfahrensschritt 1). Eine Trennung beziehungsweise Unterscheidung der Grünabfälle nach Qualität, Reinheit und/oder Zusammensetzung muss hierbei nicht erfolgen.

Nachdem eine ausreichende Menge an Grünabfällen bereitsteht und eine batchweise Weiterverarbeitung erfolgen kann, wird eine Rohstoffcharge der Grünabfälle dem Lager entnommen und mechanisch zerkleinert (Verfahrensschritt 2). Die mechanische Zerkleinerung kann insbesondere so gestaltet sein, dass große Komponenten der Grünabfälle zerkleinert werden, wohingegen kleinere Komponenten intakt bleiben. Zur Zerkleinerung kann beispielsweise ein mechanischer Shredder mit einer langsam laufenden Welle benutzt werden.

Die zerkleinerten Grünabfälle der Rohstoffcharge werden beispielsweise gesiebt (Verfahrensschritt 3), um Erdanteile herauszutrennen. Dann werden die Grünabfälle mit reduziertem Erdanteil getrocknet (Verfahrensschritt 4). Die Trocknung erfolgt bevorzugt im Wege der Mietentrocknung über einen Zeitraum von typischerweise sechs Wochen. Dabei entsteht durch die Umsetzung der Blattgrünkomponenten Wärme, die die Trocknung begünstigt.

Alternativ kann eine andere Form der Trocknung erfolgen und/oder Wärmeenergie zugeführt werden zur Beschleunigung der Trocknung.

Bei der Trocknung wird den zerkleinerten Grünabfällen, im Gegensatz zu einer Kompostierung, keine Feuchtigkeit zugeführt. Vielmehr dient die Trocknung der Reduzierung der Feuchte der Grünabfälle, ohne dass eine Umsetzung im Wege der Kompostierung erfolgen beziehungsweise begünstigt werden soll.

Nach der Trocknung werden die getrockneten Grünabfälle mechanisch weiter verkleinert (Verfahrensschritt 5). Die Verfahrensschritte 2 und 5 können den gleichen mechanischen Shredder mit langsam laufender Welle nutzen.

Nach der weiteren Zerkleinerung der getrockneten Grünabfälle werden die getrockneten und weiter zerkleinerten Grünabfälle der Rohstoffcharge getrennt. Im Wege der Trennung wird eine weiterzuverarbeitende Holzkomponente aus den getrockneten Grünabfällen der Rohstoffcharge gewonnen (Verfahrensschritt 6).

Die im Wege der Trennung gewonnene, weiterzuverarbeitende Holzkomponente wird erneut getrocknet und grob zerkleinert (Verfahrensschritt 7). Die erneute Trocknung und grobe Zerkleinerung erfolgen bevorzugt sequentiell derart, dass bevorzugt entweder zunächst die Trocknung erfolgt und dann die Grobzerkleinerung oder zunächst die Grobzerkleinerung durchgeführt wird und dann die Trocknung.

Bevorzugt erfolgt die weitere Trocknung im Wege der Mietentrocknung über einen Zeitraum von etwa sechs Wochen, wobei der zu trocknenden und gegebenenfalls schon grob zerkleinerten Holzkomponente Wärmeenergie zugeführt werden kann. Dies ist insbesondere vorteilhaft vor dem Hintergrund, dass der Holzkomponente jegliche Blattgrünkomponenten fehlen, die umgesetzt werden können und dabei Wärme entstehen lassen. Eine Restfeuchte der getrockneten Holzkomponente ist nach der Trocknung typischerweise kleiner als 15 % und bevorzugt kleiner als 10 %.

Die Grobzerkleinerung wird beispielsweise so durchgeführt, dass die grob zerkleinerte und gegebenenfalls bereits getrocknete Holzkomponente eine Teilchengröße im Bereich von 0 mm bis 200 mm aufweist.

Die getrocknete und grob zerkleinerte Holzkomponente wird dann mechanisch fein zerkleinert (Verfahrensschritt 8). Die Feinzerkleinerung der getrockneten Holzkomponente erfolgt dabei typischerweise so, dass eine Teilchengröße von maximal 20 mm bereitgestellt wird.

Die feinzerkleinerte Holzkomponente wird dann im Verfahrensschritt 9 gesiebt. Durch das Sieben wird eine Feinstholzkomponente mit einer Teilchengröße von 0 bis 10 mm gewonnen. Darüber hinaus wird üblicherweise eine getrennt zu verwertende Holzhackschnitzelkomponente mit einer Teilchengröße von 10 bis 20 mm gewonnen. Die Holzhackschnitzelkomponente kann anschließend getrennt verwertet werden. Alternativ kann die Holzhackschnitzelkomponente erneut zerkleinert werden, bis die feinzerkleinerte Holzkomponente insgesamt als Feinstholzkomponente mit der gewünschten Größe von 0 bis 10 mm zur Verfügung gestellt wird.

Die Feinstholzkomponente wird dann in einer Brikettpresse brikettiert (Verfahrensschritt 10). Bevorzugt erfolgt die Brikettierung ohne Verwendung von Zusatzstoffen oder zugegebenen Bindemitteln. Allein das in der Feinstholzkomponente enthaltene Lignin dient als natürliches Bindemittel.

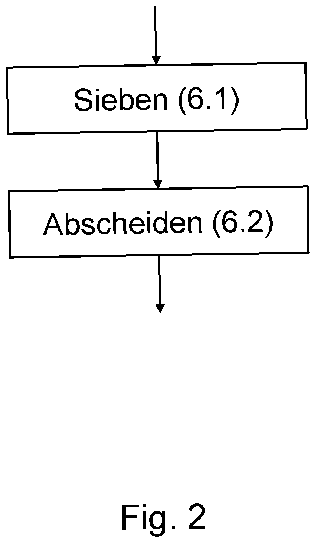

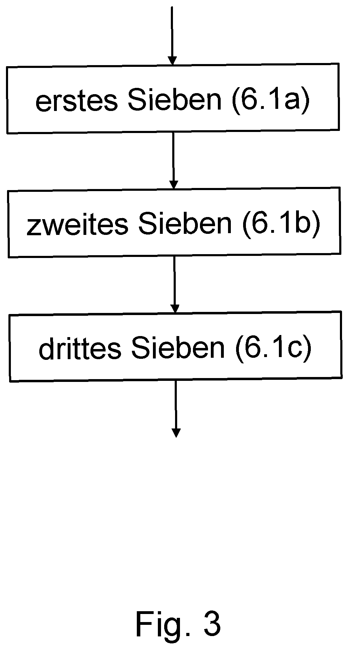

Eine mögliche Ausgestaltung des Trennverfahrensschritts 6 ist in Fig. 2 gezeigt. Die Trennung 4 erfolgt hierbei mehrstufig. Sie umfasst einen Unterverfahrensschritt 6.1 "Sieben" sowie eine Unterverfahrensschritt 6.2 "Abscheiden". Das Sieben 6.1 kann wiederum mehrstufig erfolgen. Ein mögliches mehrstufiges Siebverfahren ist exemplarisch in Fig. 3 dargestellt. Es sieht insofern einen ersten Siebeschritt 6.1a, einen zweiten Siebeschritt 6.1b sowie einen dritten Siebeschritt 6.1c vor.

Das mehrstufige Sieben 6.1a, 6.1b, 6.1c dient insbesondere der Gewinnung von Komponenten unterschiedlicher Zusammensetzung, Größe und Qualität. Beispielsweise kann in dem ersten Siebverfahrensschritt 6.1a eine Humuskomponente gewonnen werden, wohingegen der zweite Siebverfahrensschritt 6.1b und/oder der dritte Siebverfahrensschritt 6.1c bevorzugt der Gewinnung von Mischkomponenten mit Kleinholz und Steinen dienen können, die ebenfalls separat verwertet oder weiterverarbeitet werden können. Das Kleinholz, das hierbei herausgetrennt wird, ist aufgrund seiner Größe, seiner Menge und seiner Durchmischung mit Fremdstoffen für die weiteren Verfahrensschritte des erfindungsgemäßen Verfahrens nicht oder wenig geeignet.

Das Abscheiden der Holzkomponente (Unterverfahrensschritt 6.2) verwendet bevorzugt ein Wasserbad, das der Trennung der schwimmenden Holzkomponente von anderen Feststoffen mit einer größeren Dichte dient. Die schwimmende Holzkomponente wird dabei an der Oberfläche des Wasserbads abgefischt beziehungsweise ausgetragen. Die Feststoffe mit der größeren Dichte sinken demgegenüber zu Boden und können von dort beispielsweise beim Förderband abtransportiert werden. Allein die im Wege der Trennung gewonnene Holzkomponente wird zu Holzbriketts weiterverarbeitet.

Das erfindungsgemäße Herstellverfahren liefert neben den Holzbriketts zahlreiche Nebenprodukte, die unmittelbar und getrennt von den Holzbriketts wirtschaftlich verwertet oder weiterverarbeitet werden können. Einer unmittelbaren wirtschaftlichen Verwertung können beispielsweise die Humuskomponente sowie die Holzhackschnitzelkomponente dienen, wohingegen die Mischkomponenten gegebenenfalls weiterverarbeitet werden und beispielsweise das Kleinholz von den Steinen oder anderen mineralischen Komponenten getrennt wird.

## Patentansprüche

1. Verfahren zur Herstellung von Holzbriketts aus Grünabfällen, welches batchweise arbeitet und die folgenden Verfahrensschritte vorsieht, die in der angegebenen Reihenfolge durchlaufen werden:
(1) aus unterschiedlichen Bezugsquellen zur Verfügung gestellte Grünabfälle werden an einem Lagerplatz wenigstens so lange gesammelt, bis eine für eine Batchverarbeitung ausreichende Rohstoffcharge an Grünabfällen bereitsteht;
(2) die Grünabfälle der Rohstoffcharge werden dem Lager entnommen und dann mechanisch zerkleinert;
(3) die zerkleinerten Grünabfälle werden getrennt, wobei Erdanteile entfernt und Grünabfälle mit reduziertem Erdanteil gewonnen werden;
(4) die Grünabfälle mit reduziertem Erdanteil werden getrocknet;
(5) die getrockneten Grünabfälle werden mechanisch weiter zerkleinert;
(6) die weiter zerkleinerten Grünabfälle werden getrennt, wobei im Wege der Trennung eine weiterzuverarbeitende Holzkomponente aus den weiter zerkleinerten Grünabfällen gewonnen wird;
(7) die weiterzuverarbeitende Holzkomponente wird getrocknet und grob zerkleinert;
(8) die getrocknete und grob zerkleinerte Holzkomponente wird mechanisch fein zerkleinert;
(9) die fein zerkleinerte Holzkomponente wird gesiebt, wobei im Wege des Siebens eine Feinstholzkomponente aus der Holzkomponente gewonnen wird;
(10) die Feinstholzkomponente wird brikettiert.

2. Verfahren nach Anspruch 1, **dadurch gekennzeichnet, dass** die Trocknung (Verfahrensschritt 4) der Grünabfälle mit reduziertem Erdanteil im Wege einer Mietentrocknung für eine Zeitdauer von vier bis acht Wochen erfolgt.

3. Verfahren nach Anspruch 1 oder 2, **dadurch gekennzeichnet, dass** die zunächst getrockneten und dann weiter zerkleinerten Grünabfälle in einem mehrstufigen Verfahrensschritt (6) getrennt werden, wobei der mehrstufige Trennungsverfahrensschritt (6) ein Sieben (6.1, 6.1a, 6.1b, 6.1c) und/oder ein Abscheiden (6.2) als Unterverfahrensschritte umfasst und wobei die weiterzuverarbeitende Holzkomponente im Wege des Abscheidens gewonnen wird.

4. Verfahren nach Anspruch 2, **dadurch gekennzeichnet, dass** das Sieben (6.1, 6.1a, 6.1b, 6.1c) als Unterverfahrensschritt ebenfalls mehrstufig erfolgt, wobei durch das Sieben (6.1, 6.1a, 6.1b, 6.1c) eine Humuskomponente und/oder eine Mischkomponente mit Kleinholz und Steinen gewonnen werden, und/oder dass beim Abscheiden die weiterzuverarbeitende Holzkomponente in einem Wasserbad von anderen Feststoffen mit einer größeren Dichte getrennt wird.

5. Verfahren nach einem der Ansprüche 1 bis 4, **dadurch gekennzeichnet, dass** die im Wege der Trennung (Verfahrensschritt 6) gewonnene weiterzuverarbeitende Holzkomponente sequentiell getrocknet und grob zerkleinert wird, wobei entweder zunächst die Trocknung erfolgt und dann die Grobzerkleinerung oder zunächst die Grobzerkleinerung durchgeführt wird und dann die Trocknung.

6. Verfahren nach einem der Ansprüche 1 bis 5, **dadurch gekennzeichnet, dass** die im Wege der Trennung (Verfahrensschritt 6) gewonnene weiterzuverarbeitende Holzkomponente in einer Miete für eine Zeitdauer von vier bis acht Wochen getrocknet wird und/oder dass die weiterzuverarbeitende Holzkomponente zum Zwecke der Trocknung erwärmt wird.

7. Verfahren nach einem der Ansprüche 1 bis 6, **dadurch gekennzeichnet, dass** die getrocknete und grob zerkleinerte Holzkomponente mechanisch auf eine Größe von maximal 20 mm zerkleinert wird.

8. Verfahren nach Anspruch 7, **dadurch gekennzeichnet, dass** die zerkleinerte Holzkomponente gesiebt und im Wege der Siebung die Feinstholzkomponente mit einer Größe von maximal 10 mm von einer Holzhackschnitzelkomponente mit einer Größe im Bereich von 10 bis 20 mm getrennt wird.

9. Verfahren nach Anspruch 8, **dadurch gekennzeichnet, dass** die Feinstholzkomponente ohne Zusatzstoffe brikettiert wird, wobei das in der Feinstholzkomponente enthaltene Lignin als natürliches Bindemittel dient.

10. Verfahren nach Anspruch 8 oder 9, **dadurch gekennzeichnet, dass** die Holzhackschnitzelkomponente erneut zerkleinert wird auf eine maximale Größe von 10 mm und dann ebenfalls der Brikettierung zugeführt wird.
